# EUROPEAN PATENT SPECIFICATION

(11) **EP 2 971 924 B1**
(45) Date of publication and mention of the grant of the patent: **24.06.2020**
(21) Application number: 14714547.8
(22) Date of filing: 12.03.2014
(51) Int. Cl.: F16L 41/12

(54) **MECHANICAL PIPE FITTING**
MECHANISCHE ROHRVERBINDUNG
RACCORD DE TUYAUTERIE MÉCANIQUE

(30) Priority: 15.03.2013 US 201361802135 P; 03.05.2013 US 201361819420 P
(43) Date of publication of application: 20.01.2016
(73) Proprietor: Shurjoint Metals Inc, Pingtung County 913 (TW)
(72) Inventor: CHENG-SHENG, Hsu, Taipei City 106 (TW); LIPPKA, Sandra M., Warwick, Rhode Island 02886 (US); DUNCHAK, Kristy M., Canton, Massachusetts 02021 (US)
(74) Representative: Gray, James
(86) International application number: PCT/US2014/024916
(87) International publication number: WO 2014/151076

(56) References cited:
- EP-A1- 2 182 266
- EP-A1- 2 369 215
- DE-U1-202007 017 260
- FR-A1- 2 809 471
- GB-A- 1 084 311

## Description

### Priority Data

This application claims the benefit of U.S. Provisional Application No. 61/802,135, filed March 15, 2013, and U.S. Provisional Application No. 61/819,420, filed May 3, 2013.

### Technical Field

This invention relates generally to pipe fittings and more specifically devices and methods for coupling fluid conveying piping in an arrangement providing one or more branch connections.

### Background of the Invention

EP 2 182 266 A discloses a system which has an elastic material joint, whose external peripheral is maintained by a section of a channel joint of an engaging head. Vertical relief ribs are provided on an external periphery of the joint. The section of the channel joint has a cylindrical regular interior surface complementary to a guide of an external periphery of the joint so that free spaces are created between a section of the joint of the channel and storehouses at a non-compressed state of the joint.

Mechanical tees provide a fast and easy mid-point branch outlet which is perpendicular to a main pipe in a piping system. Traditional mechanical tees are comprised of an upper and lower housing, an elastomeric gasket and a pair of bolts and nuts. To install a mechanical tee a prescribed sized hole is cut on the centerline of the main pipe. The upper housing and gasket are positioned around the hole. The lower portion of the housing is then positioned on the underside of the pipe opposite the hole and the bolts and nuts are installed and tightened so that the mechanical tee firmly saddles the pipe providing a leak tight joint and branch outlet. There are a number of sizes and configurations of mechanical tees including; male threaded, female threaded and grooved outlets. In addition mechanical tees can be provided in and for use in a variety of materials including iron, carbon steel, stainless steel, bronze/copper and HDPE.

Because the upper portion of the mechanical tee housing comes into contact with the flow media (water, chemical, etc.) it must be made of a compatible material so as to avoid galvanic or chemical corrosion and or contamination, etc. The variety of materials and configurations of the upper portion needed for different applications can require a large number and variety of upper portions to be stocked by a parts supplier or manufacturer. In addition, these different materials can have different physical strengths and costs. Thus, a bronze mechanical tee can be more expensive and weaker than a comparable ductile iron mechanical tee. Moreover, a stainless steel mechanical tee would be even more expensive than an equivalent bronze or ductile version. Accordingly, there is a need to address these problems and challenges mentioned to provide a mechanical tee fitting arrangement that provides for the varied configurations and materials to suit the applications while maintaining a desired strength throughout the assembly at a preferably minimized material cost.

### Summary of the Invention

According to the present invention there is provided a mechanical tee fitting according to claim 1.

Other preferred embodiments are disclosed in the dependent claims.

### Brief Descriptions of the Drawings

The accompanying drawings, which are incorporated herein and constitute part of this specification, illustrate exemplary embodiments of the invention, and, together with the description given above and the detailed description given below, serve to explain the features of the exemplary embodiments of the invention.
FIG. 1 is an isometric partial cross-sectional view of a branch connection.
FIG. 2 is an isometric exploded view of the preferred mechanical tee fitting used in the branch connection of FIG. 1.
FIG. 2A is a partial isometric exploded view of the fitting of FIG. 2.
FIG. 3 is a cross-sectional view of the fitting of FIG. 2.
FIG. 3A is another isometric cross-sectional view of the branch connection of FIG. 1.
FIGS. 4A-4B are various isometric views of an insert used in the fitting of FIG. 2.
FIGS. 5A-5B are various isometric views of another insert used in the fitting of FIG. 2.
FIGS. 6A-13A are various views of alternate embodiments of the insert and housing and combinations thereof for use in the mechanical fitting of FIG. 2.
FIG. 14 is an alternate preferred embodiment of a mechanical pipe fitting.

### Detailed Description

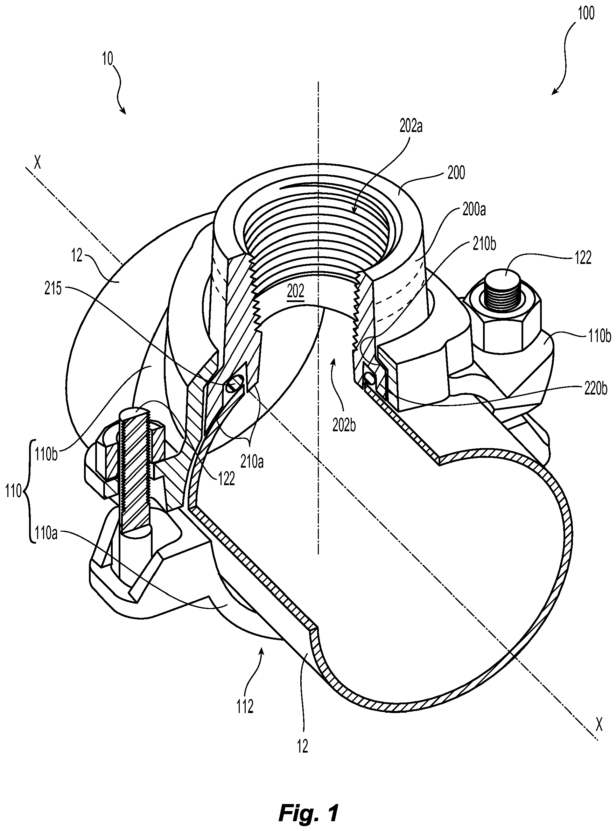

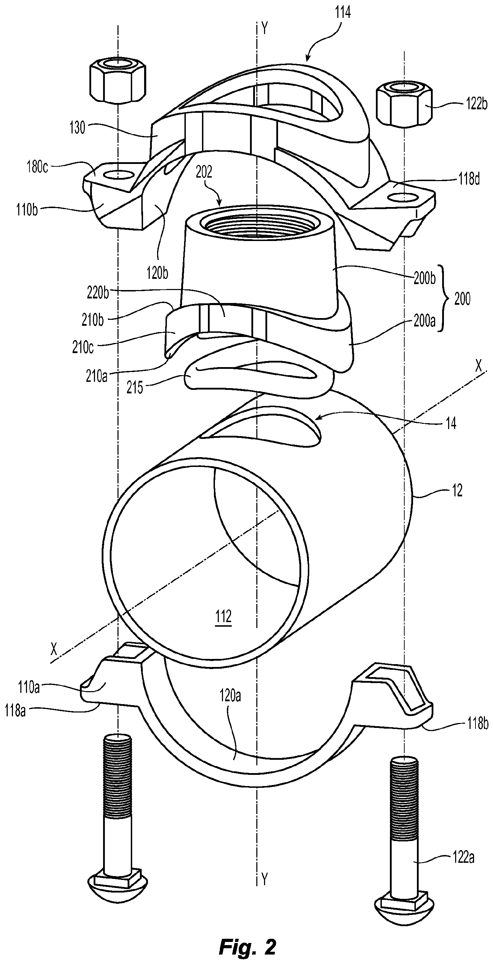

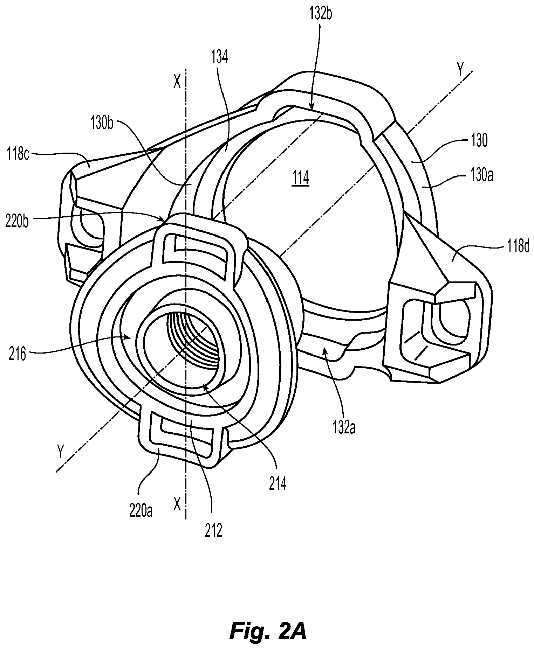

Shown in FIGS. 1 and 2 is a branch connection 10 formed with a preferred embodiment of a mechanical fitting 100. The preferred mechanical fitting 100 includes a housing 110 disposed about the pipe segment 12 with an insert 200 disposed in and extending from the housing 110 to provide the subject branch connection to a pipe housed in the housing 110. The housing 110 preferably includes a first or lower housing segment 110a and a second or upper housing segment 110b which are coupled together, preferably by a pair of mechanical fasteners 122 to define an interior space 112 defining a central axis X-X in which the pipe segment 12 is axially housed. Alternatively, instead of the lower housing segment 110a and the pair of mechanical fasteners 122, a bolt in the shape of a U could be utilized. Moreover, a suitable arrangement could be employed to secure the upper housing segment 110b to the pipe segment 12, such as, a strap or a clamp.

The preferably tubular insert 200 has a base 200a and a stem 200b extending from the base 200a. The base 200a is disposed within the housing 100 and the stem 200b extends through an opening 114 formed in the upper housing 110b. The tubular insert 200 includes an internal fluid passageway 202 having a longitudinal axis Y-Y and one end 202b placed in fluid communication with an opening 14 formed in the wall of the pipe segment 12. The opposite exposed end 202a of the passageway 202 provides a fluid inlet or outlet port of the passageway 202 which may be coupled to another pipe fitting or fluid flow device, such as for example, a pipe nipple or sprig of a fire protection system. Accordingly, the fitting 100 provides for a branch connection 10 from the otherwise continuous pipe segment 12.

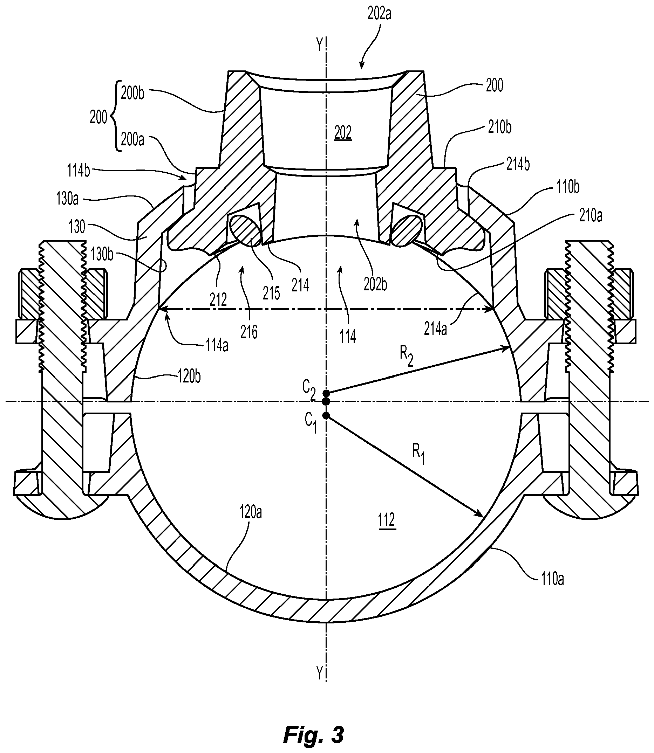

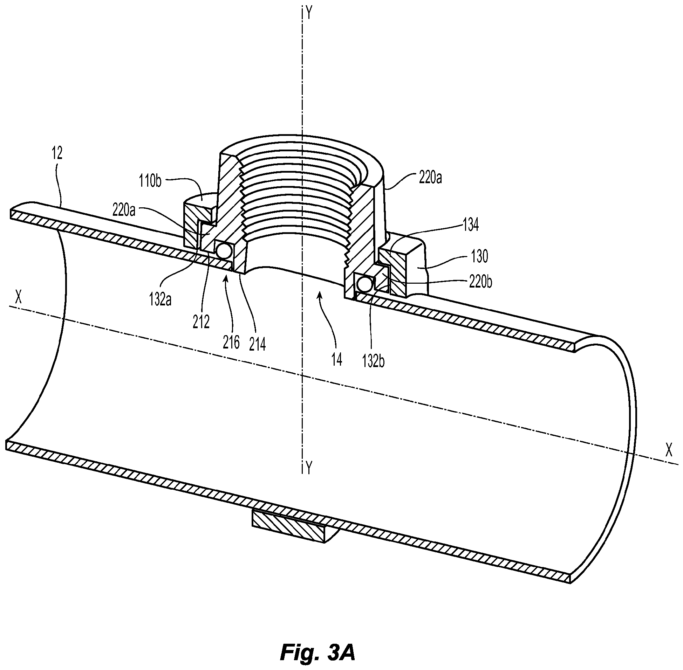

The preferred fitting 100 preferably provides for an interchangeable branch connection. More specifically, the housing 110 is preferably configured to work or be compatible with a plurality of variably configured inserts 200 to provide variably sized or configured stems 200b and/or internal passageways 202. Each of the preferred inserts 200 and more preferably each of the bases 200a engage the housing 110 to provide the desired seal of the branch connection 10. Referring to FIGS. 2A, 3 and 3A, embodiments of the fitting 100 include an internal surface of the housing segment 110 which engages the base portion 200a of the insert 200 to form the sealed connection. Preferably, the internal surface of the housing 110 and the base 200a of the insert 200 engage one another to orient the base 200a and distribute, preferably uniformly, the clamping force of the housing fasteners 122 about the base 200a and its internal gasket 215.

Generally, the base 200a of the insert 200 has a distal surface 210a that engages the pipe segment 12 and a proximal surface 210b that forms a surface contact with the internal surface of the housing segment 110. The distal surface 210a defines a saddle-like geometry with a first annular segment 212 that preferably circumscribes a second annular segment 214 to define an annular chamber 216 therebetween. The annular chamber 216 is preferably sized with a depth to house the annular gasket 215 for forming a fluid tight seal with the pipe segment 12 disposed in the interior space 112 of the housing 110. The first and second annular segments 212, 214 are each preferably bent about an axis of curvature which extends parallel to the central axis X-X. The curvature of the distal surface 210a provides for a saddle engagement with the pipe segment 12 as seen, for example, in FIG. 1. Moreover, as seen in the bisected cross-sectional view of FIG. 3, the second annular segment 214 preferably extends distally further than the first annular segment 212. The additional axial length preferably ensures that the second annular segment 214 is disposed within the opening 14 formed in the pipe segment 12 upon engagement of the first annular segment 212 with the outer surface of the pipe segment 12. By locating the second annular segment 214 within the pipe opening 14, the insert 200 and fitting 100 can be self-centering or self-supporting in forming the branch connection 10.

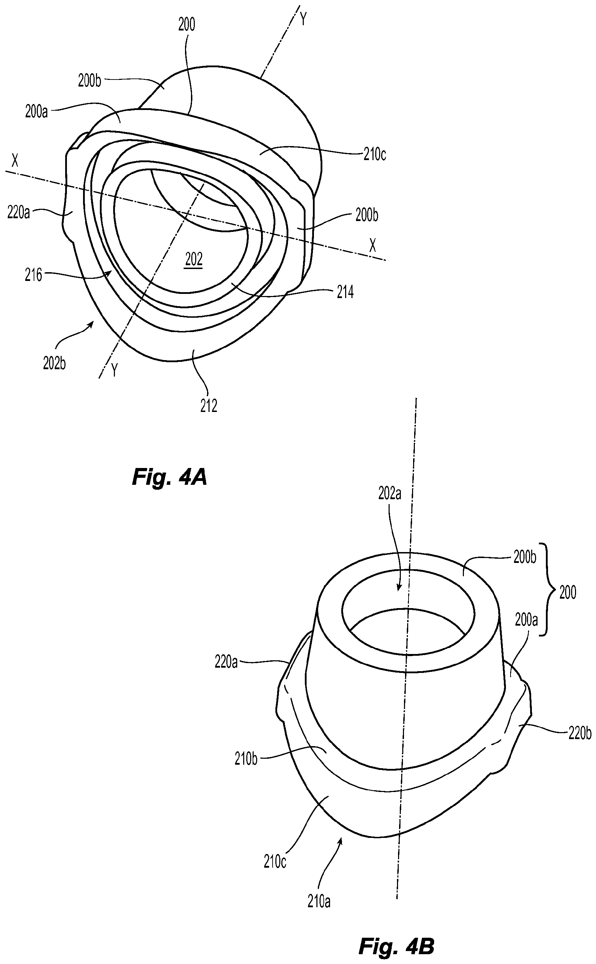

The base 200a includes a proximal surface 210b and more preferably an annular segment formed about the stem 200b of the insert 200. Generally, the proximal surface 210b extends parallel to the distal surface 210a of the insert base 200a. Like the distal surface 210a, the proximal surface 210b is also preferably curved about an axis of curvature that extends parallel to the central axis X-X. Extending between the distal and proximal surfaces 210a, 210b is a peripheral wall 210c of the base 200a. As seen in FIG. 4B, the peripheral wall 210c preferably defines a central cylindrical periphery with a pair of tabs 220a, 220b diametrically opposed about and radially extending from the central periphery. More particularly, the tabs 220a, 220b are disposed about the gasket 215 disposed in the annular chamber 216. The tabs 220a, 220b are preferably axially aligned with the central axis X-X such that each tab 220a, 220b is bisected by a plane defined by the intersection of the central and longitudinal axes X-X, Y-Y. In the branch connection, as seen for example in FIG. 1, the proximal and distal surfaces of the tabs 220a, 220b respectively engage the inner surface of the housing 110 and the outer surface of the pipe segment 12 to provide additional support to the connection 10 for proper sealing about the pipe segment 12. The distal surface tabs 220a, 220b preferably define at least a line point contact with the surface of the pipe segment 12.

With the fitting 100 installed about the pipe segment 12, the stem 200b of the insert 200 provides for an inlet or outlet port in fluid communication with the inner space of the pipe segment 12. Accordingly, the inside and outside surfaces of the stem 200a can be configured to provide the desired type of branch connection between the pipe segment 12 and an external device or fitting. For example, the stem 200b can be configured to provide for any one of a particular, nominal pipe size and/or pipe engagement. For example, the nominal sizes can be any size shown and described in the installation instructions for the known fitting of SHURJOINT MODEL C723 BRONZE MECHANICAL TEE from Shurjoint.

More specifically, the outer surface of the stem 200b may include an external thread, such as for example, an external male NPT thread or other known accepted pipe thread. Alternatively, as seen in FIG. 1, the internal surface of the stem 200b proximate the inlet 202a may be internally threaded to define a female pipe thread in accordance with any known and accepted pipe standard. Further in the alternative, the outer surface of the stem 200b can include an external groove (shown in dashes) for engagement with groove type coupling. Additionally, the outer surface may be configured for other types of fittings or connections, such as for example, an interference fit, solder or welded connection. Regardless of the type of connection, the stem 200b is preferably sized for connection with industry accepted or nominal sized end fittings. For example, where the housing and its interior space 112 is sized for housing a pipe segment of a nominal 76.2mm (three inches (3 in.)), the stem 200b preferably defines a nominal size of any one of 50.8mm (two inch (2 in.)); 38.1mm (1-1/2 inch) or nominal 25.4mm (one in (1 in.)). Other nominal sizes are possible, provided the base 200a and housing 110 can provide sufficient ceiling to complete the branch connection. As shown in the cross-sectional view of FIG. 3, the passageway 202 varies in its width or diameter over the axial length. The passageway tapers so as to narrow or expand the passageway 202. Thus, the passageway can be configured to provide a desired inlet to or outlet port from the interior of the pipe segment 12 to provide the desired internal flow characteristics of the passageway 202.

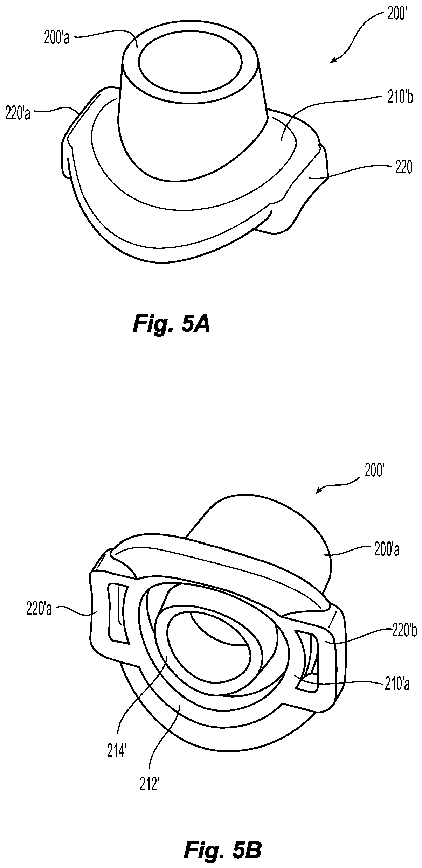

Accordingly, multiple inserts 200 may be alternatively configured to provide for an interchangeable insert 200 for use with a singularly configured housing 110 and thereby provide a mechanical fitting 100 for varied types of branch connections 10. Shown in FIGS. 4A and 4B are various isometric views of a preferred embodiment of the insert 200 showing the base 200a with the tabs 220a, 220b defining the proximal surface 210b of a first surface area and the stem 200b of a first nominal size. Shown in FIGS. 5A and 5B is an alternatively configured insert 200' having a reduced stem 200'b with a second nominal size smaller than the first nominal size and a proximal surface 210'a of a second surface area greater than the first surface area.

To provide the preferred interchangeable fitting 100, the housing is preferably configured to be compatible with the bases 200a of the variably configured inserts 200. Referring again to FIG. 2, the preferred housing 110 preferably includes a lower housing segment 110a and an upper housing segment 110b. Each housing segment 110a, 110b generally includes an arcuate and more preferably semi-circular body centrally disposed between two end pads 118a, 118b, 118c, 118d. Each of the end pads 118 preferably include a through bore for housing a bolt 122a which extends axially through two end pads of the opposed housing segments 110a, 110b to couple the housing segments together. The segments 110a, 110b are preferably secured to a nut 122b threaded onto the bolt 122a. Alternate mechanical fasteners may be used to secure the housing segments in their opposed relationship to provide for the housing 110 of the fitting 100.

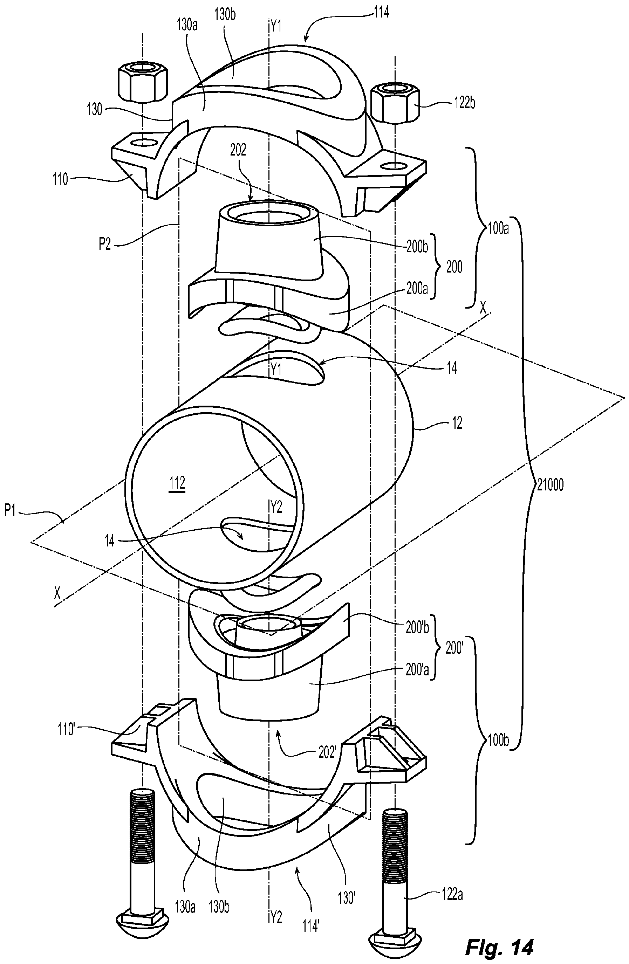

The preferred lower housing segment 110a includes a first inner preferably arcuate and more particularly a continuous concave surface 120a for engaging the pipe segment 12. The upper housing segment 110b includes a second inner preferably arcuate surface 120b for engaging the pipe segment 12. Each of the upper and lower inner surfaces 120a, 120b are opposed to one another to define the interior space 112 of the fitting 100 to house the pipe segment 12. Preferably each of the lower and upper inner surfaces 120a, 120b respectively define a radii of curvatures R1, R2 from respective centers of curvature C1, C2, as seen in FIG. 3, such that when they are opposed to one another they define the substantially circular interior space 112 to house a nominally sized pipe segment 12, such as for example, a nominal sized pipe ranging from a nominal 25.4mm (one inch (1 in.)) or nominal 76.2mm (three inch (3 in.)). The inner surfaces 120a, 120b each preferably subtend an arc of 180 degrees about its center of curvature or alternatively subtend an arc of less than 180 degrees provided the inner surfaces 120a, 120b are sufficient to house the pipe segment 12 and facilitate the fluid tight seal described therein. Although preferred fitting 100 of FIGS. 2 and 2A is shown with the lower housing segment 110a having a continuous concave surface 120a and the upper housing segment 110b having different and preferred features described herein below, it should be understood that the lower housing segment 110a can be alternatively configured similarly to the upper housing 110b, as seen for example in FIG. 14, provided that their opposed inner surfaces are sufficient to house the pipe segment 12. More particularly, the lower housing 110a can include the same combination of preferred features of the upper housing 110b as described below.

The upper housing segment 110b is further preferably configured to be compatible with variably configured inserts 200 to provide for the interchangeable fitting 100. More preferably, the upper housing segment 110b defines an internal cavity of the housing 110 that engages the insert 200 and more preferably houses the base 200a of the insert to both orient the insert 200 and provide sufficient clamping force to effect the seal of the fitting 100. The body of the upper housing segment 110b includes an annular collar 130 having an outer surface 130a and inner surface 130b, each of which extend about the axis Y-Y to define the opening and internal cavity 114 of the upper housing 110b.

The internal surface 130b defines a first end 114a of the cavity 114 contiguous with the arcuate inner surface 120b and a second end 114b of the cavity through which the stem 200b of the insert 200 extends. Moreover, the inner surface 130b is preferably configured to orient and prevent rotation of the insert 200 about the axis Y-Y and facilitate the sealed engagement about the pipe segment 12. Referring to FIG. 2A, the cavity 114 defined by the internal surface 130b is substantially cylindrical to house the base 200a of the insert 200. Additionally, the inner surface 130b defines a pair of recesses 132a, 132b for engagement with the tabs 220a, 220b. The portions of the inner surface 130b which define the recesses 132a, 132b preferably define a geometry that corresponds to the periphery of the base wall 210c which defines the tabs for a preferred interlocking engagement between the recesses 132a, 132b and the tabs 220a, 220b of the insert 200. Thus, where the periphery of the base defining the tabs 220a, 220b is substantially rectangular, the inner surface 130b of the housing defines the recesses 132a, 132b to be rectangular and of a dimension to receive the tabs 220a, 220b. The pair of recesses 132a, 132b are spaced apart and axially aligned for engagement with the tabs 220a, 220b of the insert 200 and more preferably aligned parallel to the central axis X-X defined by the housing interior 112 so as to orient the insert 200 and the tabs 220a, 220b along the axis X-X parallel to a pipe segment inserted in the interior 112, as seen for example in FIG. 3A. Moreover, the inner surface 130b and the collar 130 define an annular lip 134 at the second end 114b of the cavity for engaging the proximal surface 210b of the base 200a so as to distribute the compressive force of the fasteners over the base 200a and the gasket 215. The compressive force is further preferably distributed along the axial length of the pipe segment 12 by the axially aligned engagement of the tabs 220a, 220b with the outer surface of the pipe segment 12.

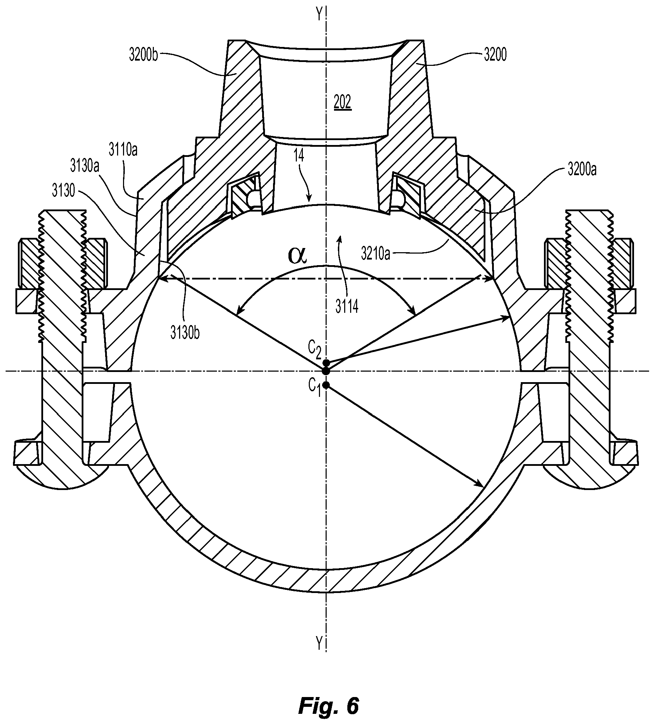

With reference to FIGS. 2 and 2A, formation of the preferred branch includes forming the opening 14 in the piping segment 12, which has a preferred nominal diameter ranging from 50.8mm to 152.4mm (from two to six inches (2 in. - 6 in.)) and preferably about 76.2mm (three inches (3 in.)). The opening 14 is formed to a preferred maximum diameter of about 31.8mm to about 44.5mm (about 1-1/4 inch to about 1-3/4 inch) so long as it can accommodate insertion of the tubular insert 200. The gasket 215 is inserted into the annular chamber 216 formed in the distal end of the tubular insert 200 and is disposed over the opening 14 with the second annular segment 214 disposed within the opening 14. The tubular insert is oriented such that the first annular segment 212 forms the preferred saddle-type engagement between the distal surface 210a of the base 200a and the piping segment 12. The tabs 220a, 220b are preferably axially aligned with the axial length of the pipe segment 12 engaged with the outer surface of the pipe segment about the opening 14. The upper and lower housings 110a, 110b are disposed about the pipe 12 and insert 200 such that the stem 200b extends through the opening of the upper housing and the base 200a is received in the cavity 114 formed in the upper housing 110b. The tabs 220a, 220b are engaged within the recesses 132a, 132b to maintain the insert 200 oriented with the tabs 220a, 220b aligned parallel to the central axis X-X of the pipe segment 12. To couple the fitting 100 together and form the fluid tight seal, the bolts 122a extend through the end pads 118a, 118b, 118c, 118d and are secured by the nuts 122b. The bolts 122a are preferably disposed about the pipe segment 12 extending parallel to the longitudinal axis Y-Y of the stem 200b. The bolt and nut assemblies 122a, 122b are torqued to compress the gasket 215 about the opening 14. The gasket 215 is schematically shown in the base and it should be understood that the gasket when utilized is placed solely on the exterior of the pipe segment 12. Furthermore, other gasket configurations can be utilized, such as, a solid ring with a polygonal cross-sectional profile or a gasket with two lip portions that engage the second annular segment 214 and the pipe segment 12, as shown, for example, in FIG. 6.

Preferably, the compressive force is distributed over the gasket 215 by the engagement of the annular lip 134 with the proximal surface 210b of the base 200a. Should it be desired to change the size or type of the insert 200, the mechanical tee fitting can be disassembled and the insert 200 interchanged with an alternatively configured insert 200. Although preferred embodiments of a mechanical fitting provide that the fitting can be easily assembled, disassembled and interchangeably reassembled, it should be understood that alternate embodiments can provide for a preassembled mechanical fitting in which, for example, the insert 200 and housing 110 are toleranced and configured for a press-fit engagement or other interference fit to provide a preassembled fitting for shipping to a distributor, jobsite or other location.

The completed branch connection places the fluid passageway 202 of the tubular insert 200 in fluid communication with the pipe segment 12. Accordingly, the insert 200 is compatible with the fluid being conveyed within the pipe segment 12. The insert 200 can be formed from the same material as the pipe segment 12 and can be formed from, for example, iron, carbon steel, stainless steel, bronze/copper or plastic, such as for example, high-density polyethylene (HDPE). In one particular embodiment, the upper and lower housing segments, 110a, 110b are preferably made from a material that is different than that of the insert 200 and more preferably made from a material stronger than the tubular insert 200. In an embodiment of the mechanical tee fitting 100 which requires the fluid carrying tubular insert 200 to be formed from a higher cost material, such as stainless steel, the material cost of the mechanical tee fitting can be minimized by forming the housing 110 from a lower cost material, such as for example, cast or ductile iron.

Generally, the previously described embodiments provide that rotation between the upper housing and the insert are minimized or eliminated due to the engagement between the axially aligned tabs of the insert and the recesses of the upper housing with each disposed parallel to the pipe axis. However, the fitting can be alternatively configured to prevent relative rotation between the insert and the upper housing about the stem axis without the tabs. Described are such alternate embodiments.

Shown in FIG. 6 is an alternate embodiment of the fitting 3100 in which the base 3200a of the insert 3200 does not include the previously described tabs. Instead, the curvature of the distal surface 3210a of the base 3200a provides for a saddle engagement with the pipe segment 12. The upper housing 3110a securing the tubular body insert 3200 over the opening 14 preferably includes a collar 3130 with an outer surface 3130a and an inner surface 3130b to define an opening and cavity 3114. The stem 3200b of the insert 3200 is inserted through the opening such that the base 3200a is received within the cavity. The base 3200a and its distal surface 3210a preferably define a pipe engagement surface curved about and engaged with the outer surface of the pipe 12 about the opening 14 to define an arc length α sufficient so as to prevent relative rotation between the tubular body and the housing about the axis.

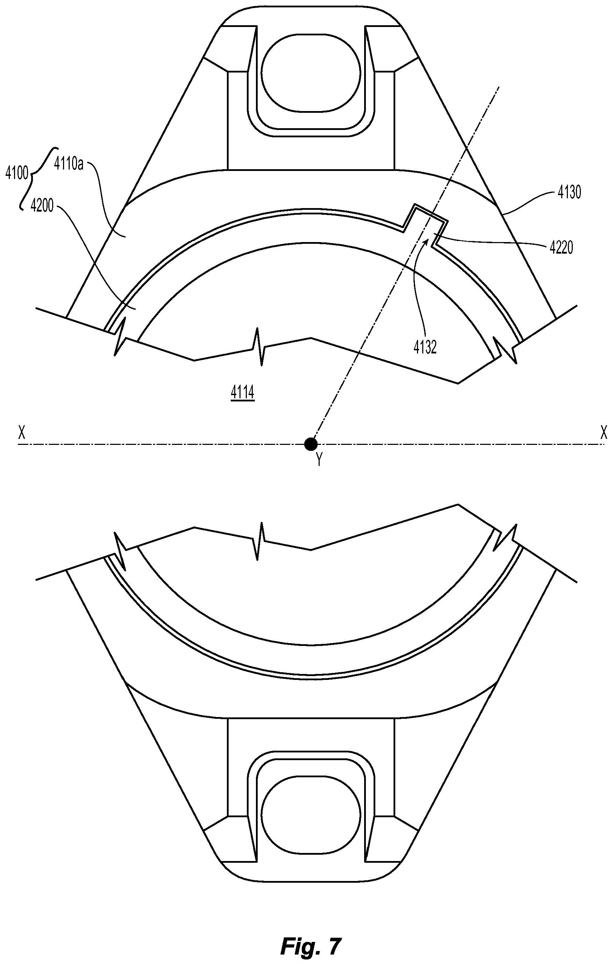

Shown in FIG. 7 is a partial view of an alternate embodiment of the mechanical tee fitting 4100 viewed with the tubular insert 4200 inserted in the upper housing 4110a. The base 4200a of the insert 4200 alternatively includes one or more radially extending projections 4220 extending oblique to the pipe segment axis X-X of the pipe segment 12. Accordingly, an alternate embodiment of the upper housing 4110a and its collar 4130 preferably includes a recess 4132 that is correspondingly oblique to the pipe segment axis X-X. The recess 4132 is preferably formed along the internal surface of the collar 4130 to form a preferably close fit with the projection 4220 of the tubular insert such that their engagement prevents relative rotation between the housing 4110 and the tubular insert 4200 about the stem axis Y-Y. The oblique tab 4220 and its recess 4132 are shown as a substantially rectangular in plan view, but may be oblong, triangular, circular or otherwise polygonal provided the fit between the oblique tab 4220 and its recess 4132 prevents the relative rotation between the fitting components 4110, 4200. The tab 4220 and the recess 4132 may extend any axial length in the direction of the Y-Y axis so long as their engagement prevents the relative rotation between the components. Moreover, if there are two obliquely extending tabs 4220, the tabs are preferably disposed 180 degrees from one another about the stem axis Y-Y.

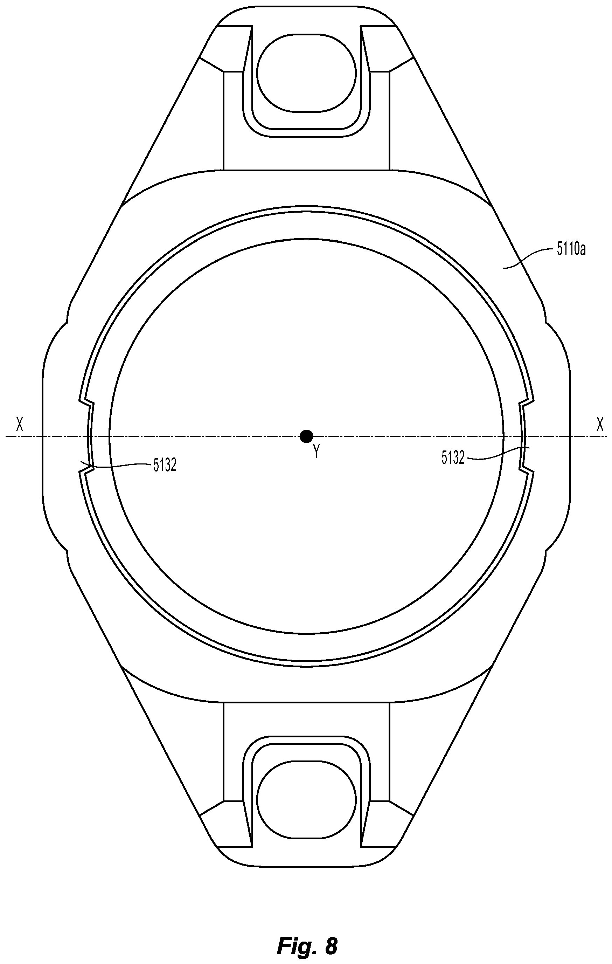

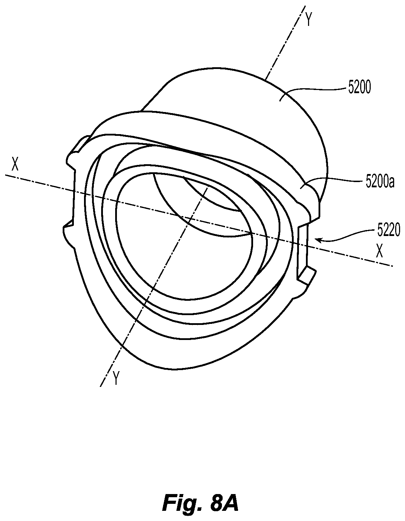

Shown in FIGS. 8 and 8A, are respective alternate embodiments of the upper housing 5110a and tubular insert 5200 in which a tab or projection 5132 is formed along the internal surface of the annular collar 5130 of the upper housing 5110a. Preferably formed about the base 5200a of the insert 5200 is a recess 5220 to form a preferably close fit with the projection 5132 of the housing 5100a such that their engagement prevents relative rotation between the housing 5110 and the insert 5200 about the stem axis. In FIG. 8, the tab 5132 and its recess 5220 are shown as substantially rectangular in plan view, but may be oblong, triangular, circular or otherwise polygonal provided the fit between the tab 5132 and its recess 5220 prevents the relative rotation between the fitting components 5110a, 5200. The tab 5132 and the recess 5220 may extend any axial length in the direction of the Y-Y axis so long as their engagement prevents the relative rotation between the components. Moreover, if there are two obliquely extending tabs 5132, the tabs are preferably disposed 180 degrees from one another about the stem axis Y-Y.

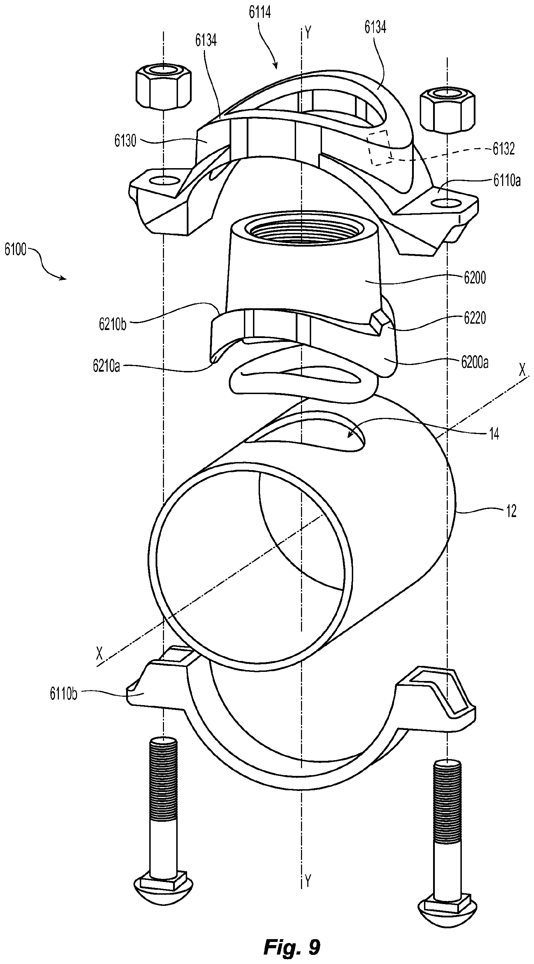

Shown in FIG. 9 is an alternate embodiment of the fitting 6100 in which the base 6200a of the insert 6200 includes a proximal surface 6210b and an opposite distal surface 6210a for engaging a pipe segment 12. The proximal surface 6210b preferably includes one or more axially extending projections or tabs 6220 for engagement with a correspondingly sized recess 6132 formed along the inner surface of the collar 6130 and preferably along the annular lip 6134 circumscribing the opening 6114 of the upper housing 6110a. The axially extending tab 6220 of the insert 6200 and the recess 6132 form a preferably close fit such that their engagement defines the desired orientation between the upper housing 6110a and the insert 6200 and prevents their relative rotation about the stem axis Y-Y. The proximally disposed tab 6220 may be located anywhere along the proximal surface 6210b. In one preferred embodiment, the tab 6220 is preferably aligned in a direction perpendicular to the pipe segment axis X-X defined by the housing 6110. As with the other embodiments, the tab 6220 may be oblong, triangular, circular or otherwise polygonal provided the fit between the tab 6220 and its recess 6132 prevents the relative rotation between the fitting components 6110a, 6200.

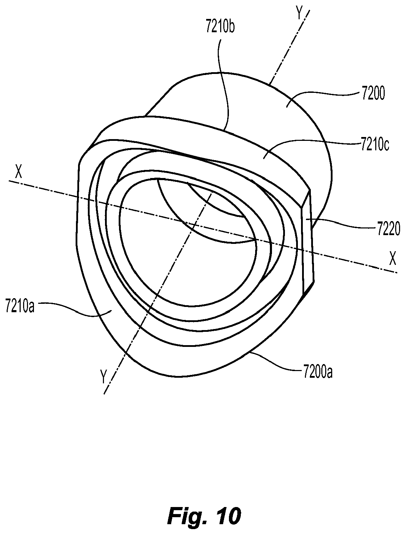

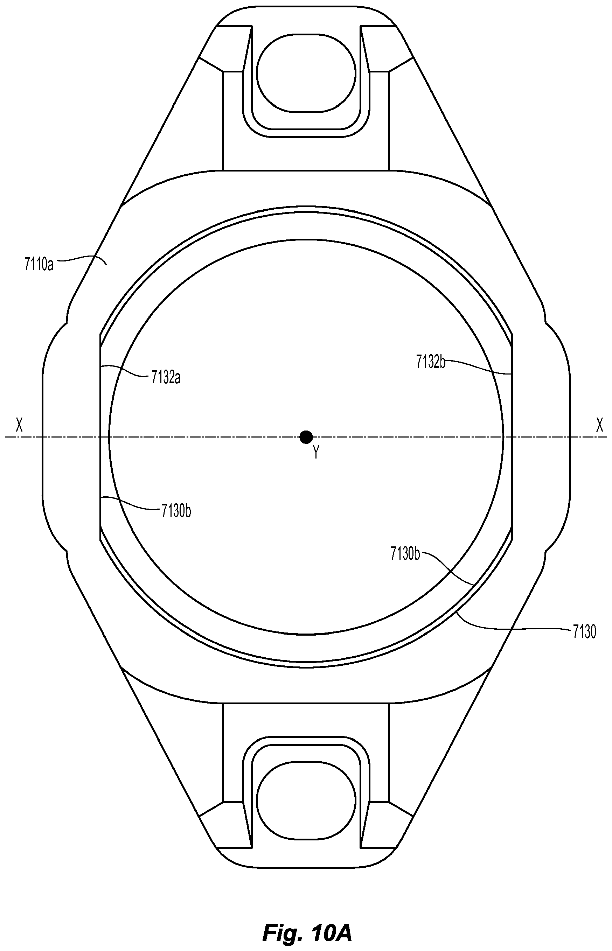

Shown in FIGS. 10 and 10A are respective alternate embodiments of the tubular insert 7200 and the upper housing 7110a, in which the base 7200a of the tubular insert 7200 includes one or more planar surfaces 7220 disposed about the stem axis Y-Y. More specifically, the base 7200a includes a proximal surface 7210b, an opposite distal pipe engagement surface 7210a and a wall 7210c circumscribing the stem axis Y-Y extending between the proximal and distal surfaces. The wall 7210c preferably defines one or more planar surfaces disposed about the stem axis Y-Y. The inner surface of the collar 7130 preferably includes one or more planar surfaces 7132 located such that when the insert 7200 is inserted through the opening of the upper housing 7110a, the planar surfaces 7220, 7132 are spaced from one another and more preferably parallel to one another such that their relative positions to one another prevent rotation of the components 7200, 7110a with respect to one another. In one preferred embodiment, each of the base 7200a and the inner surface of the collar 7130 include two planar surfaces 7220a, 7132a, 7220b, 7132b that are parallel to one another disposed about the stem axis Y-Y. Accordingly, the base 7200a of the stem and the inner surface of the upper housing 7110a preferably define noncircular geometries such that the insert 7200 cannot rotate within the upper housing 7110a.

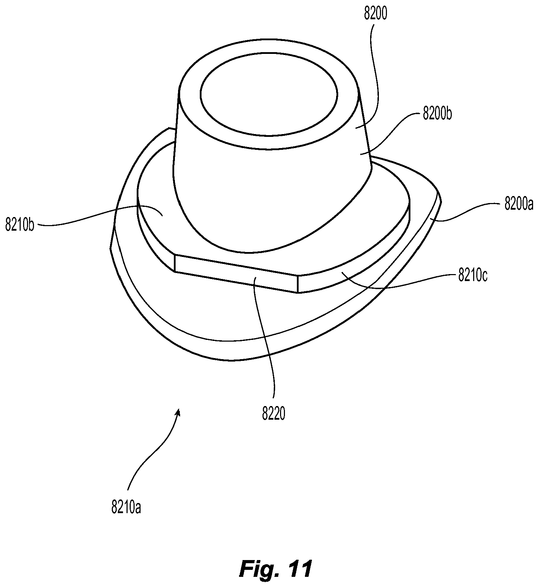

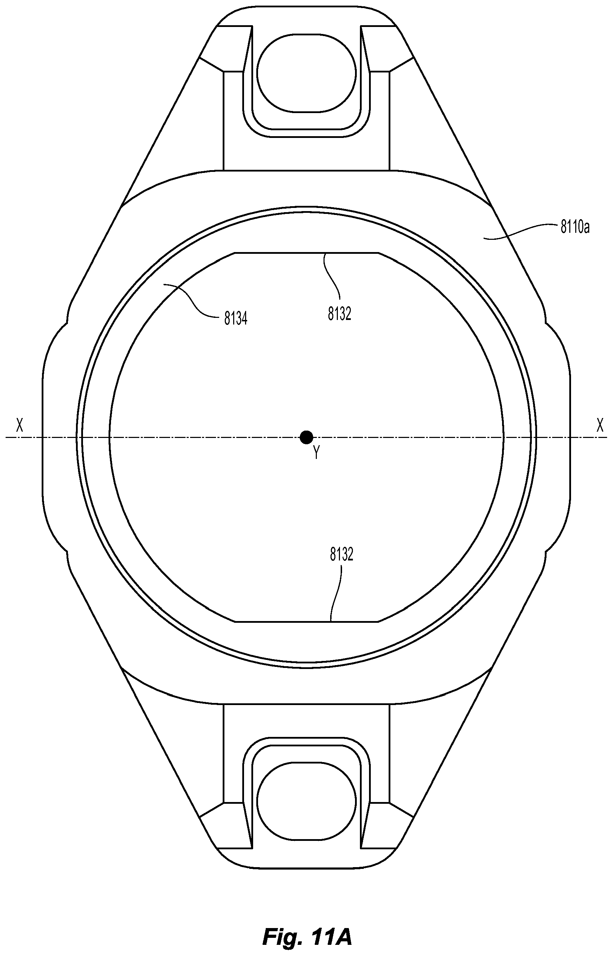

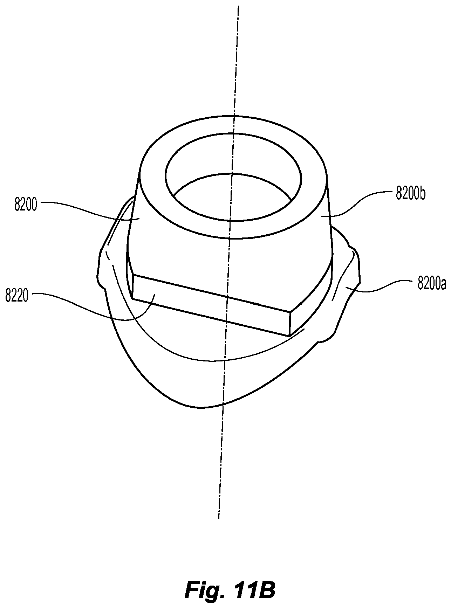

Shown in FIGS. 11 and 11A are respective alternate embodiments of the tubular insert 8200 and the upper housing 8100a. As with the previous embodiment, the base 8200a of the insert 8200 preferably includes a planar surface 8220 along the peripheral wall 8210c. The planar surface 8220 can be formed on a raised boss formed at the distal end of the stem 8200b or can be alternatively formed at the distal end of the stem 8200b, as seen in FIG. 11B. The collar 8130 of the housing segment 8110a that is to be disposed about the stem 8200b preferably includes an annular lip 8134 circumscribing the stem axis Y-Y. The inner surface of the annular lip 8134 preferably includes a planar surface 8132 that is located so as to parallel the planar surface 8220 of the base 8200a. Accordingly in one particular embodiment, the inner surface of the annular lip 8134 can define a polygon, such as for example a rectangle. The base 8200a and its peripheral wall 8210c can preferably define a corresponding polygon such as for example a rectangle for insertion and engagement with the annular lip 8134.

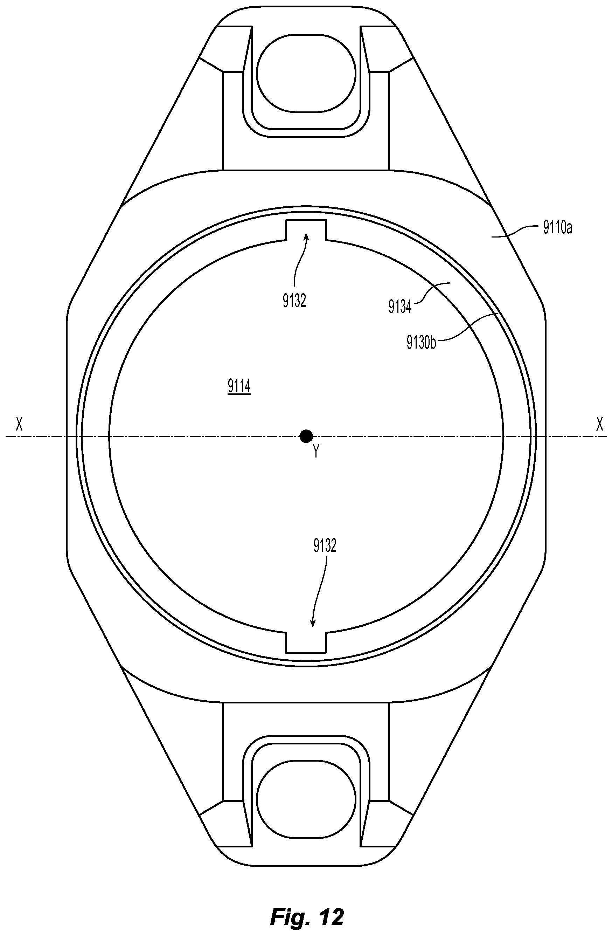

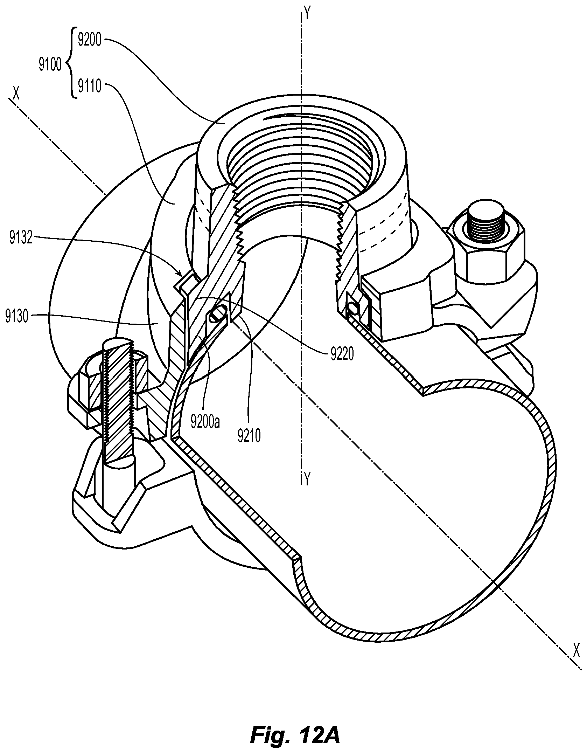

Shown in FIGS. 12 and 12A is an alternate embodiment of the fitting 9100 in which the base 9200a of the insert 9200 includes a proximal surface 9210b and an opposite distal surface 9210a for engaging a pipe segment 12. The proximal surface 9210b preferably includes one or more axially extending tabs 9220 for engagement with a notch 9132 formed along the inner surface 9130b of the collar 9130 and preferably along the annular lip 9134 circumscribing the opening 9114 of the housing 9110a. The axially extending tab 9220 of the insert 9200 and the notch 9132 engage one another such that their engagement defines the desired orientation between the housing 9110a and the insert 9200 and prevents their relative rotation about the stem axis Y-Y. Preferably the tab 9220 extends axially of the notch 9132 and the annular lip 9134 so as to provide a visual indicator of the desired orientation. The proximally disposed tab 9220 may be located anywhere along the proximal surface 9210b. In one preferred embodiment, the tab 9220 is preferably aligned in a direction perpendicular to the pipe segment axis X-X defined by the housing 9110a. As with the other embodiments, the tab 9220 may be oblong, triangular, circular or otherwise polygonal provided the fit between the tab 9220 and its recess 9132 prevents the relative rotation between the fitting components 9110, 9200.

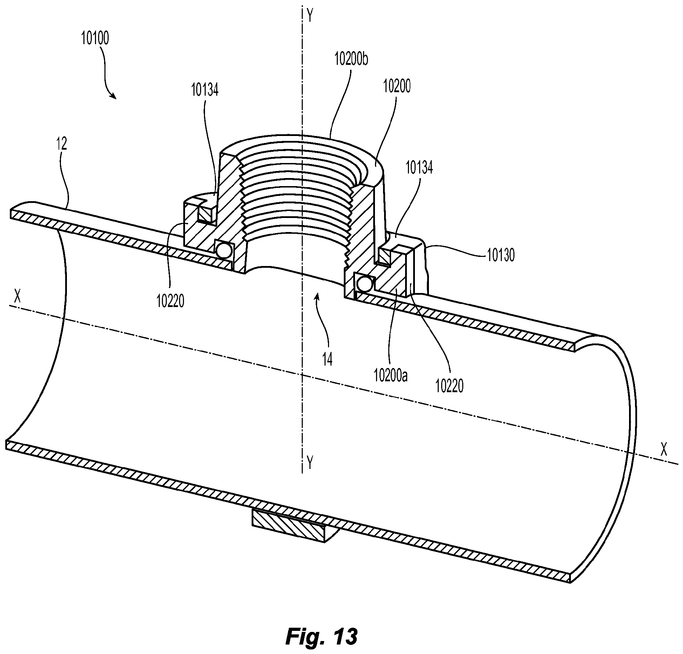

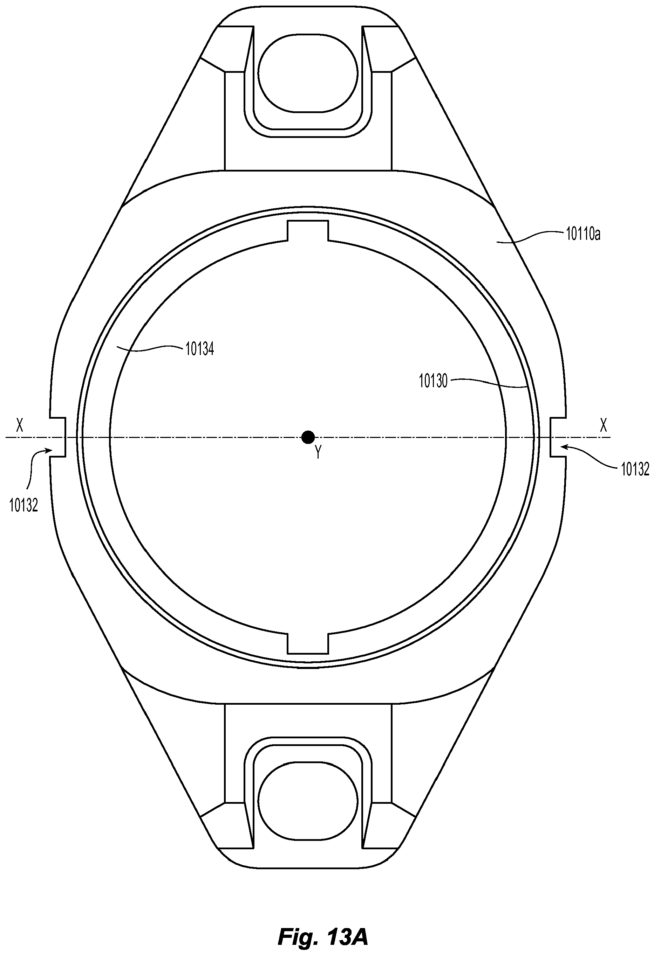

Shown in FIGS. 13 and 13A is another alternate embodiment of the fitting 10100 in which the base 10200a of the insert 10200 includes a pair of axially extending tabs 10220 disposed about and preferably diametrically opposed about the stem 10200b. More preferably, the axially extending tabs 10220 are preferably radially spaced from the stem 10200b so as to define a gap therebetween. The upper housing 10110a and its collar 10130 are shown in FIG. 13A, the collar 10130 including an annular lip 10134 and a recess 10132 along the outer surface for engaging the tabs 10220 such that a portion of the annular lip 10134 is disposed between the stem 10200b and the tab 10220, and an outer surface of the tab 10220 is exposed to an exterior of the collar 10130 and substantially aligned with an outer surface of the collar 10130.

The previously described preferred embodiments of a housing and insert assembly provide for alternate embodiments of a mechanical tee fitting defining a single branch connection to a pipe segment as seen, for example, in FIGS. 1 and 2. However, it should be understood that the mechanical fittings can be combined for assembly and installation along the same pipe segment to provide for a mechanical pipe fitting having multiple branch connections. Moreover, the multiple fittings can be disposed relative to one another such that the internal fluid passageway of one insert of one fitting is placed in fluid communication with the internal fluid passageway of another insert of another fitting. Shown in FIG. 14 is one preferred embodiment of a mechanical fitting 21000 disposed about the pipe segment 12 defining multiple and preferably two branch connections along the pipe segment 12. The mechanical fitting 21000 preferably includes a first fitting assembly 100a having first tubular body 200 that includes a base 200a and a stem 200b for forming a pipe connection along a first stem axis Y1-Y1 with a first opening 14 in the pipe segment 12. The first fitting assembly 100a further includes a first housing segment 110 having a collar 130 with an outer surface 130a and an inner surface 130b to define an opening and a cavity 114. The stem 200b of the first tubular body 200 is inserted through the opening of the first housing 110 such that the base 200a of the first tubular body 200 is received within the cavity 114 and engaged with the inner surface 130b of the first housing 110 so as to prevent relative rotation between the first tubular body 200 and the first housing 110 about the first stem axis Y1-Y1.

The mechanical fitting 21000 preferably includes a second fitting assembly 100b to provide another branch connection to the pipe segment 12. The second fitting assembly 100b preferably includes a second tubular body 200' having a base 200'a and a stem 200'b for forming a pipe connection along a second stem axis Y2-Y2 with a second opening 14' in the pipe segment 12. The second fitting assembly 100b further includes a second housing segment 110' having a collar 130' with an outer surface 130'a and an inner surface 130'b to define an opening and a cavity 114'. The stem 200'b of the second tubular body 200' is inserted through the opening of the second housing 110' such that the base 200'a of the second tubular body 200' is received within the cavity 114 and engaged with the inner surface 130'b of the second housing 110' so as to prevent relative rotation between the second tubular body 200' and the second housing 110' about the second stem axis Y2-Y2.

The first and second fitting assemblies 100a, 100b and their respective inserts and housings are preferably disposed relative one another about the pipe segment 12 and a plane PI that includes the pipe segment axis X-X and lengthwise bisects the pipe segment 12. The internal fluid passageways 202, 202' of the first and second stems 200b, 200'b are preferably in fluid communication with one another and the pipe segment 12. Moreover, the first stem axis Y1-Y1 of the first tubular body 200 and the second stem axis Y2-Y2 of the second tubular body 200' are preferably disposed in a common plane P2 disposed orthogonal to the pipe segment axis X-X. In the preferred multi-branch fitting 21000, the inner surface of the second housing 110' is disposed opposite the inner surface of the first housing 110 such that the first stem axis Y1-Y1 is axially aligned with the second stem axis Y2-Y2. Alternatively, the fittings 110a, 110b can be oriented with respect to one another so as to skew the first and second stem axes Y1-Y1, Y2-Y2 relative to one another.

The first and second fitting assemblies 100a, 100b of the multi-branch mechanical fitting 21000 are shown with the tubular inserts and housing of the mechanical fittings shown and described with respect to FIGS. 1, 2, 2A, 3, 3A, 4A and 4B. It should be understood that the first and second fitting assemblies 100a, 100b can be alternatively configured to include features of the inserts and housings of the previously described mechanical tee fittings shown in FIGS. 5A, 5B, 6, 7, 8, 8A, 9, 10, 10A, 11, 11A, 11B, 12, 12A, 13, and 13A. Further in the alternative, the preferred multi-branch mechanical fitting can be configured to include a known mechanical tee fitting, such as for example the SHURJOINT MODEL C723 BRONZE MECHANICAL TEE from Shurjoint, alone or in combination with any one of the preferred mechanical tee fittings previously described. Accordingly, an arrangement is provided in which the branch connections defined by the tee fittings can be disposed parallel to one another, disposed in the same plane, skewed relative to one another and more preferably axially aligned and opposed about the pipe segment. Moreover, the first and second fitting assemblies 100a, 100b can be similarly configured; or alternatively, the first and second fitting assemblies 100a, 100b can be configured differently from one another. As shown in FIG. 14, the first and second housings 110, 110' are coupled to one another about the pipe segments 12 by a pair of nut and bolt assemblies 122a, 122b. The housings 110, 110' can be coupled to one another by alternative and known mechanical fasteners. Further in the alternative, the fitting assemblies 100a, 100b and their respective housing 110, 110' can be separately secured to the pipe segment 12 by techniques previously described, e.g., U-shaped bolt, strap or clamp.

While the present invention has been disclosed with reference to certain embodiments, numerous modifications, alterations, and changes to the described embodiments are possible without departing from the scope of the present invention. Accordingly, it is intended that the present invention not be limited to the described embodiments, but that it has the full scope defined by the language of the following claims.

## Claims

1. A mechanical tee fitting (100) comprising:
a lower housing (110a) having a first concave surface (120a);
an upper housing (110b) having a second concave surface (120b), the upper housing (110b) coupled to the lower housing (110a) such that the first and second concave surfaces (120a, 120b) are opposed to one another to define an interior space of the fitting with a first central axis (X-X) for housing a tubular pipe segment (12) aligned with the first central axis (X-X), the upper housing (110b) being coupled to the lower housing (110a) by a pair of fasteners (122) disposed about the first central axis(X-X), the upper housing (110b) including a collar (130) having an internal surface (130b) circumscribed about a second central axis (Y-Y) to define a cavity (114) having a first end and a second end spaced from the first end, the first end being in communication with the interior space, the internal surface (130b) of the collar (130) further defining a substantially cylindrical central portion of the cavity and a pair of recesses (132a,132b) formed about the cylindrical central portion, the collar (130) including an annular lip circumscribing the second central axis (Y-Y) to define the second end of the cavity; and
an insert (200) having a tubular body including a proximal portion defining a stem (200b) and a distal portion defining a base (200a), the tubular body including an inner surface circumscribing a longitudinal axis of the insert to define a fluid flow passageway (202) extending axially through the tubular body, the base (200a) including a proximal surface (210b) and a distal surface (210a), the distal surface defining a first annular segment (212) for engaging the tubular pipe segment (12), and a second annular segment (214) for insertion in an opening (14) formed in the pipe segment (12), the first annular segment (212) surrounding the second annular segment (214), the base including a pair of tabs (220a,220b) formed about the fluid flow passageway (202) and engaged with the recesses (132a132b) of the upper housing (110b) to prevent rotation of the insert (200) about the second central axis (Y-Y), the tabs (220a,220b) being aligned in a direction parallel to the first central axis (X-X) of the fitting for at least line point contact with the surface of the pipe segment (12).

2. The mechanical tee fitting (100) of claim 1, wherein the pair of fasteners (122) are disposed about the passageway (202) of the insert (200) to couple the upper housing (110b) to the lower housing (110a).

3. The mechanical tee fitting (100) of claim 2, wherein each of the upper housing (1 10b) and the lower housing (110a) includes a body with a pair of end pads (118a,118b,118c,118d) disposed about the body, each end pad (118a,118b,118c,118d) having a through hole, each fastener (122) being disposed in one of the through holes.

4. The mechanical tee fitting (100) of claim 2, wherein the pipe engagement surface includes a channel (216) formed between the first and second annular segments (212,214), and a gasket (215) disposed in the channel (216).

5. The mechanical tee fitting (100) of claim 1, wherein the second annular segment (214) is disposed distal of the first annular segment (212).

6. The mechanical tee fitting (100) of claim 1, wherein the annular lip of the upper housing (110b) engages the proximal surface of the base (200a).

7. The mechanical tee fitting (100) of claim 1, wherein the interior space is configured to house a pipe segment (12) having a nominal diameter of 25.4mm (one inch (1 in.)) or 76.2mm (three inches (3 in.)).

8. The mechanical tee fitting (100) of claim 7, wherein one of the inner surface or outer surface along the stem (200b) of the insert (200) is configured for a nominal pipe size engagement, the nominal size being any one of 25.4mm (one inch); 38.1mm (1-1/2 inch) and three inch (76.2mm).

9. The mechanical tee fitting (100) of claim 7, wherein the outer surface along the stem (200b) of the insert (200) is configured for one of a threaded or grooved pipe engagement.

10. The mechanical tee fitting (100) of claim 9, wherein the inner surface along the stem (200b) of the insert (200) is configured for threaded pipe engagement.

11. The mechanical tee fitting (100) of claim 9, wherein the lower and upper housings (110a,110b) are made of one material and the insert (200) is made of another material different than the one material.

12. The mechanical tee fitting (100) of claim 11, wherein the lower and upper housings (110a,110b) are made of cast iron and the insert (200) is made of one of bronze, stainless steel, and carbon steel.

## Patentansprüche

1. Mechanisches T-Formstück (100) mit:
einem unteren Gehäuse (110a) mit einer ersten konkaven Fläche (120a);
einem oberen Gehäuse (110b) mit einer zweiten konkaven Fläche (120b), wobei das obere Gehäuse (110b) mit dem unteren Gehäuse (110a) so verbunden ist, dass die erste und die zweite konkave Fläche (120a, 120b) einander gegenüberliegen, um einen Innenraum des Formstücks mit einer ersten Mittelachse (X-X) zur Aufnahme eines rohrförmigen Rohrsegments (12) zu definieren, das mit der ersten Mittelachse (X-X) ausgerichtet ist, wobei das obere Gehäuse (110b) mit dem unteren Gehäuse (110a) durch ein Paar Befestigungselemente (122) verbunden ist, die um die erste Mittelachse (X-X) angeordnet sind, wobei das obere Gehäuse (110b) einen Kragen (130) mit einer Innenfläche (130b) aufweist, die eine zweite Mittelachse (Y-Y) umschreibt, um einen Hohlraum (114) mit einem ersten Ende und einem von dem ersten Ende beabstandeten zweiten Ende zu definieren, wobei das erste Ende mit dem Innenraum in Verbindung steht, wobei die Innenfläche (130b) des Kragens (130) des Weiteren einen im Wesentlichen zylindrischen Mittelabschnitt des Hohlraums und ein Paar Vertiefungen (132a, 132b) definiert, die um den zylindrischen Mittelabschnitt herum ausgebildet sind, wobei der Kragen (130) eine ringförmige Lippe aufweist, welche die zweite Mittelachse (Y-Y) umschreibt, um das zweite Ende des Hohlraums zu definieren; und
einem Einsatz (200) mit einem rohrförmigen Körper, der einen proximalen Abschnitt, der einen Stamm (200b) definiert, und einen distalen Abschnitt aufweist, der eine Basis (200a) definiert, wobei der rohrförmige Körper eine Innenfläche aufweist, die eine Längsachse des Einsatzes umschreibt, um einen Fluidströmungsdurchgang (202) zu definieren, der sich axial durch den rohrförmigen Körper erstreckt, wobei die Basis (200a) eine proximale Fläche (210b) und eine distale Fläche (210a) aufweist, wobei die distale Fläche ein erstes Ringsegment (212) für den Eingriff mit dem rohrförmigen Rohrsegment (12), und ein zweites Ringsegment (214) für das Einsetzen in eine Öffnung (14) definiert, die in dem rohrförmigen Rohrsegment (12) ausgebildet ist, wobei das erste Ringsegment (212) das zweite Ringsegment (214) umgibt, wobei die Basis ein Paar Laschen (220a, 220b) aufweist, die um den Fluidströmungsdurchgang (202) herum ausgebildet und mit Vertiefungen (132a, 132b) des oberen Gehäuses (110b) in Eingriff sind, um eine Drehung des Einsatzes (200) um die zweite Mittelachse (Y-Y) zu verhindern, wobei die Laschen (220a, 220b) in einer Richtung parallel zu der ersten Mittelachse (X-X) des Formstücks für zumindest einen Linienpunktkontakt mit der Oberfläche des Rohrsegments (12) ausgerichtet sind.

2. Mechanisches T-Formstück (100) nach Anspruch 1, wobei das Paar Befestigungselemente (122) um den Durchgang (202) des Einsatzes (200) angeordnet ist, um das obere Gehäuse (110b) mit dem unteren Gehäuse (110a) zu verbinden.

3. Mechanisches T-Formstück (100) nach Anspruch 2, wobei jedes der Gehäuse, oberes Gehäuse (110b) und unteres Gehäuse (110a), einen Körper mit einem Paar Endpolstern (118a, 118b, 118c, 118d) aufweist, die um den Körper herum angeordnet sind, wobei jedes Endpolster (118a, 118b, 118c, 118d) ein Durchgangsloch hat, wobei jedes Befestigungselement (122) in einem der Durchgangslöcher angeordnet ist.

4. Mechanisches T-Formstück (100) nach Anspruch 2, wobei die Rohreingriffsfläche einen Kanal (216), der zwischen dem ersten und dem zweiten Ringsegment (212, 214) ausgebildet ist, und ein Dichtungsring (215) aufweist, der in dem Kanal (216) angeordnet ist.

5. Mechanisches T-Formstück (100) nach Anspruch 1, wobei das zweite Ringsegment (214) distal des ersten Ringsegments (216) angeordnet ist.

6. Mechanisches T-Formstück (100) nach Anspruch 1, wobei die ringförmige Lippe des oberen Gehäuses (110b) in Eingriff mit der proximalen Fläche der Basis (200a) ist.

7. Mechanisches T-Formstück (100) nach Anspruch 1, wobei der Innenraum konfiguriert ist, um ein Rohrsegment (12) mit einem Nenndurchmesser von 25,4 mm (1 Zoll (1 in.)) oder 76,2 mm (3 Zoll (3 in.)) aufzunehmen.

8. Mechanisches T-Formstück (100) nach Anspruch 7, wobei eine der Flächen, Innenfläche und Außenfläche, entlang des Stamms (200b) des Einsatzes (200) für einen Nennrohrgrößen-Eingriff konfiguriert ist, wobei die Nenngröße eine aus 25,4 mm (1 Zoll), 38,1 mm (1 -1½ Zoll) und 3 Zoll (76,2 mm) ist.

9. Mechanisches T-Formstück (100) nach Anspruch 7, wobei die Außenfläche entlang des Stamms (200b) des Einsatzes (200) für einen aus einem Gewinde- oder Nutrohreingriff konfiguriert ist.

10. Mechanisches T-Formstück (100) nach Anspruch 9, wobei die Innenfläche entlang des Stamms (200b) des Einsatzes (200) für einen Gewindeeingriff konfiguriert ist.

11. Mechanisches T-Formstück (100) nach Anspruch 9, wobei das untere und obere Gehäuse (110a, 110b) aus einem Material hergestellt ist und der Einsatz (200) aus einem anderen Material als das eine Material hergestellt ist.

12. Mechanisches T-Formstück (100) nach Anspruch 11, wobei das untere und obere Gehäuse (110a, 110b) aus Gusseisen hergestellt ist und der Einsatz (200) aus einem der Materialien, Bronze, Edelstahl und Kohlenstoffstahl, hergestellt ist.

## Revendications

1. Raccord mécanique en té (100) comprenant :
un logement inférieur (110a) comprenant une première surface concave (120a) ;
un logement supérieur (110b) comprenant une deuxième surface concave (120b), le logement supérieur (110b) étant couplé au logement inférieur (110a) de façon à ce que les première et deuxième surfaces concaves (120a, 120b) soient opposées entre elles afin de définir un espace intérieur du raccord avec un premier axe central (X-X) pour le logement d'un segment de conduite tubulaire (12) aligné avec le premier axe central (X-X), le logement supérieur (110b) étant couplé au logement inférieur (110a) par une paire de dispositifs de fixation (122) disposés autour du premier axe central (X-X), le logement supérieur (110b) comprenant un collier (130) présentant une surface interne (130b) circonscrite autour d'un deuxième axe central (Y-Y) afin de définir une cavité (114) présentant une première extrémité et une deuxième extrémité, espacée de la première extrémité, la première extrémité étant en communication avec l'espace intérieur, la surface interne (130b) du collier (130) définissant en outre une portion centrale globalement cylindrique de la cavité et une paire de renfoncements (132a, 132b) formés autour de la portion centrale cylindrique, le collier (130) comprenant une lèvre annulaire circonscrivant le deuxième axe central (Y-Y) afin de définir la deuxième extrémité de la cavité ; et
un insert (200) comprenant un corps tubulaire comprenant une portion proximale définissant une tige (200b) et une portion distale définissant une base (200a), le corps tubulaire comprenant une surface interne circonscrivant un axe longitudinal de l'insert afin de définir un passage d'écoulement de fluide (202) s'étendant axialement à travers le corps tubulaire, la base (200a) comprenant une surface proximale (210b) et une surface distale (210b), la surface distale définissant un premier segment annulaire (212) pour l'emboîtement du segment de conduite tubulaire (12) et un deuxième segment annulaire (214) pour l'insertion dans une ouverture (14) formée dans le segment de conduite (12), le premier segment annulaire (212) entourant le deuxième segment annulaire (214), la base comprenant une paire de pattes (220a, 220b) formées autour du passage d'écoulement de fluide (202) et emboîtées avec les gorges (132a, 132b) du logement supérieur (110b) pour empêcher la rotation de l'insert (200) autour du deuxième axe central (Y-Y), les pattes (220a, 220b) étant alignées dans une direction parallèle au premier axe central (X-X) du raccord pour au moins un contact ponctuel ou linéaire avec la surface du segment de conduite (12).

2. Raccord mécanique en té (100) selon la revendication 1, dans lequel la paire de dispositifs de fixation (122) est disposée autour du passage (202) de l'insert (200) pour coupler le logement supérieur (110b) au logement inférieur (110a).

3. Raccord mécanique en té (100) selon la revendication 2, dans lequel le logement supérieur (110b) et le logement inférieur (110a) comprennent chacun un corps avec une paire de pattes d'extrémité (118a, 118b, 118c, 118d) disposée autour du corps, chaque patte d'extrémité (118a, 118b, 118c, 118d) comprenant un trou traversant, chaque dispositif de fixation (122) étant disposé dans un des trous traversants.

4. Raccord mécanique en té (100) selon la revendication 2, dans lequel la surface d'emboîtement de la conduite comprend un canal (216) formé entre les premier et deuxième segments annulaires (212, 214) et un joint d'étanchéité (215) disposé dans le canal (216).

5. Raccord mécanique en té (100) selon la revendication 1, dans lequel le deuxième segment annulaire (214) est disposé de manière distale par rapport au premier segment annulaire (212).

6. Raccord mécanique en té (100) selon la revendication 1, dans lequel la lèvre annulaire du logement supérieur (110b) s'emboîte avec la surface proximale de la base (200a).

7. Raccord mécanique en té (100) selon la revendication 1, dans lequel l'espace intérieur est conçu pour loger un segment de conduite (12) ayant un diamètre nominal de 25,4 mm (un pouce (1 in.)) ou 76,2 mm (trois pouces (3 in.)).

8. Raccord mécanique en té (100) selon la revendication 7, dans lequel une parmi la surface interne ou la surface externe le long de la tige (200b) de l'insert (200) est conçue pour l'emboîtement d'une conduite de taille nominale, la taille nominale étant une parmi 25,4 mm (un pouce); 38,1 mm (1-1/2 pouce) et trois pouces (76,2 mm).

9. Raccord mécanique en té (100) selon la revendication 7, dans lequel la surface externe le long de la tige (200b) de l'insert (200) est conçue pour un emboîtement de conduite fileté ou rainuré.

10. Raccord mécanique en té (100) selon la revendication 9, dans lequel la surface interne le long de la tige (200b) de l'insert (200) est conçue pour un emboîtement de conduite fileté.

11. Raccord mécanique en té (100) selon la revendication 9, dans lequel les logements inférieur et supérieur (110a, 110b) sont constitués d'un matériau et l'insert (200) est constitué d'un autre matériau différent de ce matériau.

12. Raccord mécanique en té (100) selon la revendication 11, dans lequel les logements inférieur et supérieur (110a, 110b) sont constitués de fonte et l'insert (200) est constitué d'un matériau parmi le bronze, un acier inoxydable et un acier au carbone.
